**Europäisches Patentamt**

**European Patent Office**

**Office européen des brevets**

(11) Veröffentlichungsnummer: **0 103 088**
**A2**

# (12) EUROPÄISCHE PATENTANMELDUNG

(21) Anmeldenummer: 83106368.0

(22) Anmeldetag: 30.06.83

(51) Int. Cl.³: **A 45 C 13/04**

(30) Priorität: **19.07.82 DE 3226933**

(43) Veröffentlichungstag der Anmeldung: **21.03.84**
**Patentblatt 84/12**

(84) Benannte Vertragsstaaten: **FR GB IT NL**

(71) Anmelder: **Gold- und Silber-Scheideanstalt Oberstein**
**Franz Reischauer, Wilhelmstrasse 24-30,**
**D-6580 Idar-Oberstein (DE)**

(72) Erfinder: **Reischauer, Ullrich, Dr., Wilhelmstrasse 24-32,**
**D-6580 Idar-Oberstein (DE)**

(74) Vertreter: **Schieferdecker, Lutz, Dipl.-Ing. et al,**
**Patentanwälte Dr.-Ing. P.K. Holzhäuser Dipl.-Met. W.**
**Goldbach Dipl.-Ing.Ing. L. Schieferdecker**
**Herrnstrasse 37, D-6050 Offenbach am Main (DE)**

(54) **Bügel und Verfahren zu seiner Herstellung.**

(57) Die Erfindung betrifft einen Bügel für Börsen, Taschen u.dgl. mit zwei Bügelhälften und mit diese in der Schließstellung haltenden, einander nach Art eines Schnappverschlusses hintergreifenden Verschlußstücken. Der Kern der Erfindung liegt darin, daß das Verschlußstück ein Kunststoffteil ist und an der Bügelhälfte mit mindestens einem in diese greifenden Halteelement befestigt ist.

EP 0 103 088 A2

0103088

16. Juli 1982 LS/B/Lu

Gold- u. Silber-Scheideanstalt
Oberstein Franz Reischauer
Wilhelmstraße 24 - 32
658o Idar-Oberstein

"Bügel und Verfahren zu seiner Herstellung"

Die Erfindung betrifft einen Bügel für Börsen, Taschen und dgl. mit zwei Bügelhälften und mit diese in der Schließstellung haltenden, einander nach Art eines Schnappverschlusses hintergreifenden Verschlußstücken.

Bügel der genannten Art sind in den verschiedensten Ausführungsformen bekannt und bestehen aus Metallblech, das zur Erzielung des gewünschten Aussehens oberflächenbehandelt bzw. galvanisiert wird und beispielsweise ein messingfarbenes Aussehen erhält. Die Verschlußstücke werden in ähnlicher Weise gefertigt und z.B. durch Löten oder Schweißen mit den Bügelhälften verbunden, wobei diese Verbindungsstellen immer wieder Schwierigkeiten mit sich bringen. Ferner ist es nicht unproblematisch, diese Teile aneinander zu befestigen, wenn sie aus verschiedenen Metallen bestehen. Dies hat vor allem zur Folge, daß es unter Kostengesichtspunkten kaum möglich ist, die Verschlußstücke in unterschiedlichen Farben zu gestalten und sie modisch zu variieren. Dasselbe trifft für bekannte Kunststoffbügel zu, bei denen zumindest das äußere Bügel-Teil mit Verschlüssen einstückig gespritzt ist.

Die Bügel der hier interessierenden Art werden schließlich in einer typischen Auftragsfertigung hergestellt, da die

- 2-

- 2 -

Weiterverarbeiter bezüglich der Form und Gestalt der Verschlüsse sehr individuelle Wünsche haben. Die Folge hiervon ist, daß eine Lagerhaltung beim Bügelhersteller nicht möglich ist. Der Erfindung liegt daher die Aufgabe zugrunde, Maßnahmen vorzusehen, die sowohl eine auch farblich sehr unterschiedliche Gestaltung der Verschlußstücke erlaubt und darüber hinaus dem Bügelhersteller die Möglichkeit gibt, Bügel mit oder ohne Verschlußstücken auf Lager zu fertigen.

Gelöst wird diese Aufgabe gemäß der Erfindung dadurch, daß das Verschlußstück ein Kunststoffteil ist und an der Bügelhälfte mit mindestens einem in diese greifenden Halteelement befestigt ist.

Der Bügel bzw. jede seiner Bügelhälften bestehen in der Regel aus einem im Querschnitt U-förmigen Bügelkanal sowie Bügelschenkeln. Zur Befestigung sind in dem Bügelkanal bzw. in seinem Steg Durchtrittsöffnungen angeordnet, durch die das bzw. die Halteelemente an dem Verschlußstück greifen. Ferner hintergreifen die Halteelemente die Ränder der Durchtrittsöffnungen, es sei denn, daß die Halteelemente mittels Klebstoff am Bügelkanal befestigt sind oder mit einem innen kunststoffbeschichteten Bügelkanal zunächst durch Ultraschall erhitzt und sodann verschweißt werden.

Die Verwendung von Verschlußstücken aus Kunststoff gestattet es, diese in jeder beliebigen Farbe zu gestalten. Ferner müssen sie nicht sofort mit einer produzierten Bügelhälfte verbunden bzw. an dieser befestigt werden und können auch wesentlich später an

/3

dieser angebracht werden, da die Befestigung einfach und unproblematisch ist. Die Bügelhälften können daher für sich in großen Serien auf Lager gefertigt und somit kostengünstig hergestellt werden.

Weitere Merkmale der Erfindung gehen aus der Beschreibung und den Zeichnungen im Zusammenhang mit den Ansprüchen hervor.

Die Erfindung wird nachstehend anhand von Ausführungsbeispielen, die in der Zeichnung dargestellt sind, näher beschrieben. Dabei zeigen:

| | |
|---|---|
| Fig. 1: | einen Bügel in perspektivischer Darstellung sowie leicht geöffnet; |
| Fig. 2: | eine perspektivische Teilansicht eines Bügels ohne Verschlußstücke; |
| Fig. 3: | eine Seitenansicht eines Verschlußstückes; |
| Fig. 4: | eine Stirnansicht eines Verschlußstückes; |
| Fig. 5: | einen Schnitt in größerem Maßstab je durch einen Bügelkanal mit Verschlußstück und ohne Verschlußstück; |
| Fig. 6: | einen Längsschnitt in größerem Maßstab durch ein abgewandeltes Verschlußstück; |
| Fig. 7: | einen Schnitt durch ein weiteres Verschlußstück vor dem Einsetzen in den zugehörigen Bügelkanal; |
| Fig. 8: | eine Ansicht wie in Fig. 7 nach dem Einsetzen des Verschlußstückes in den Bügelkanal; |
| Fig. 9: | einen Schnitt durch ein letztes Ausführungsbeispiel im eingebauten Zustand und |
| Fig.1o: | einen Schnitt wie in Fig. 9 kurz vor der endgültigen Befestigung des Verschlußstückes |

/4

- 4 -

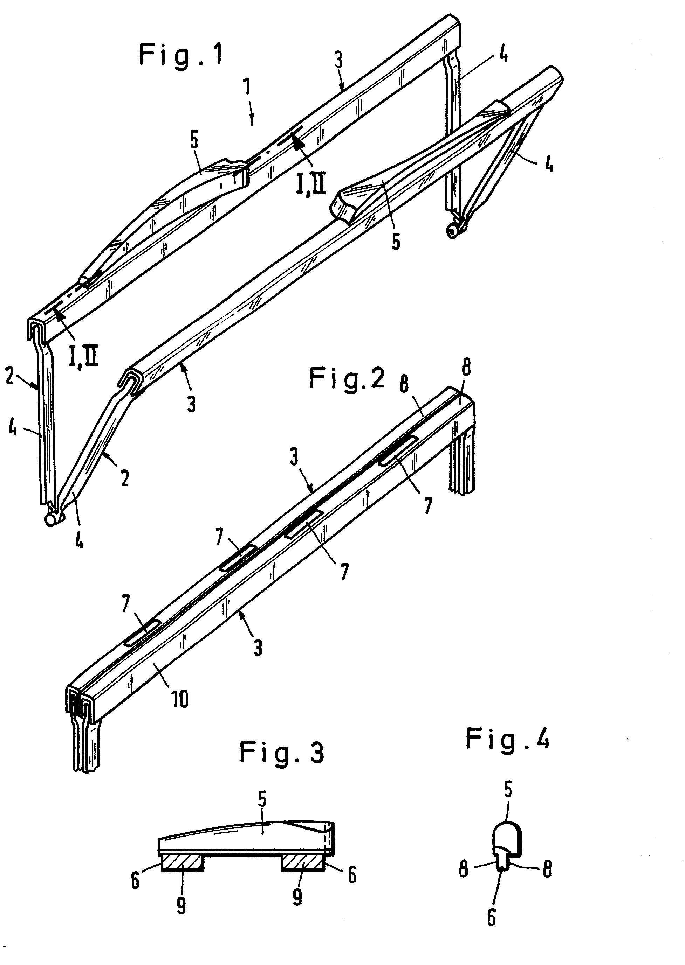

Ein Bügel 1 für Börsen, Taschen und dgl. gemäß dem in Fig. 1 dargestellten Ausführungsbeispiel besteht aus zwei Bügelhälften 2, die gelenkig miteinander verbunden sind. Jede Bügelhälfte 2 weist einen Bügelkanal 3 mit Schenkeln 4 und je einem Verschlußstück 5 auf. Das Verschlußstück 5 ist ein Kunststoffteil und kann jede beliebige Form und Gestalt besitzen.

Die Befestigung des Verschlußstückes 5 an den Bügelhälften 2 erfolgt mit Hilfe von mindestens einem in diese greifenden Halteelement 6 (Fig. 3). Vorzugsweise sind an jedem Verschlußstück 5 zwei Halteelemente bügelkanalseitig angeordnet und greifen in Durchtrittsöffnungen 7 im Steg 8 des im Querschnitt U-förmigen Bügelkanals 3. Die Durchtrittsöffnungen 7 sind gemäß der Darstellung in Fig. 2 ebenso wie die Halteelemente 6 im Querschnitt etwa rechteckig und fixieren das Verschlußstück 5 lagemäßig exakt. Insbesondere weist es Stützflächen 9 auf, die im eingebauten Zustand parallel zu den Seitenwänden 1o des Bügelkanals 3 liegen. Die unmittelbare Befestigung des Verschlußstückes 5 im Inneren 11 des Bügelkanals 3 erfolgt bei dem in den Fig. 3 - 5 dargestellten Ausführungsbeispiel zweckmäßigerweise mit Hilfe von Klebstoff 12, der die Stützflächen 9 an den Halteelementen 6 fest mit den Seitenwänden 1o des Bügelkanals 3 verbindet.

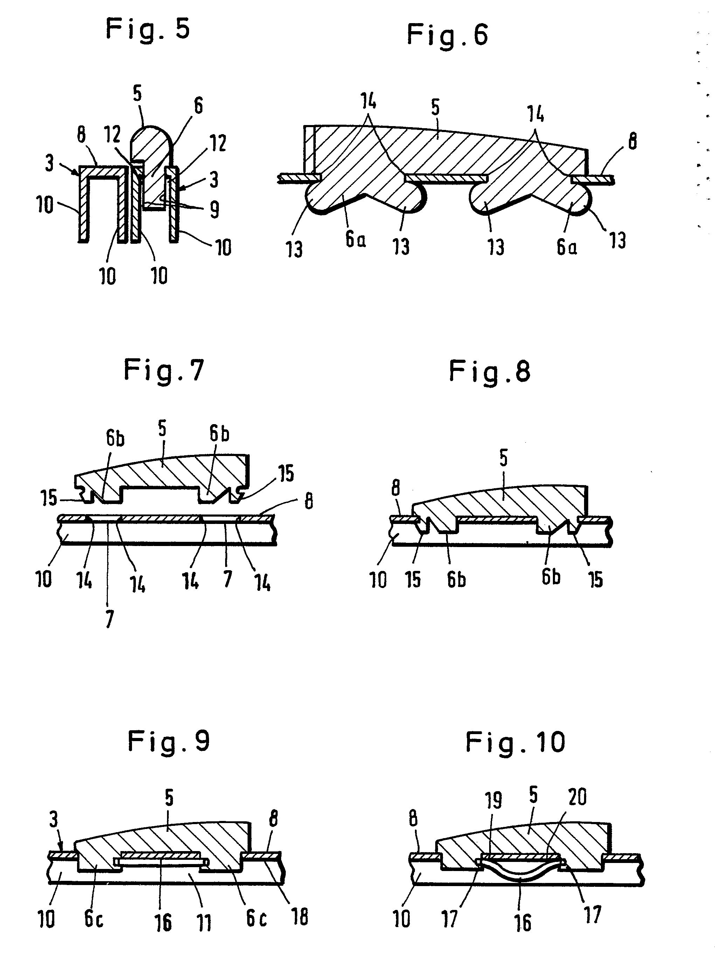

Nach einem anderen Verfahren kann das Halteelement 6 a gemäß Fig. 6 mittels Ultraschall erhitzt und sodann unter Druck derart verformt werden, daß es mit weggequetschten Materialstücken 13 die Ränder 14 der Durchtrittsöffnung 7 im Steg 8 des Bügelkanals 3 hintergreift.

/5

- 5 -

Gemäß dem in den Fig. 7 und 8 dargestellten Ausführungsbeispiel weist das Verschlußstück 5 bzw. sein Halteelement 6 b federelastische Hakenteile 15 auf, welche
im eingebauten Zustand die gegenüberliegenden Ränder 14
der Durchtrittsöffnung 7 hintergreifen. Damit die Hakenteile 15 beim Einsetzen federelastisch ausweichen können,
sind die Halteelemente 6 b keilförmig ausgeschnitten.

Die Befestigung der Verschlußstücke 5 gemäß den Fig. 9
und 1o erfolgt mit Hilfe von Federklammern 16, die mit
ihren freien Enden im eingebauten Zustand gemäß Fig. 9
in Sacklöchern 17 liegen. Diese Sacklöcher 17 befinden
sich in den einander gegenüberliegenden Seiten zweier
benachbarter Halteelemente 6 c. Ihre Lage ist ferner
derart gewählt, daß die beispielsweise aus Federstahl
bestehende, blattfederähnliche Federklammer 16 aufgrund
ihrer Vorspannung bei Anlage an der Unterseite 18 des
Steges 8 gemäß Fig. 9 die Halteelemente 6 c nach unten
bzw. zum Inneren 11 des Bügelkanals hin und somit das
Verschlußstück 5 fest an den Bügelkanal 3 zieht. Die Befestigung des Verschlußstückes 5 ist dadurch nicht nur
form-, sondern auch kraftschlüssig.

Die Fig. 1o zeigt das Einsetzen der Federklammer 16 unmittelbar vor dem Eintritt ihrer Enden 19, 2o in die
Sacklöcher 17.

Der Bügelkanal 3 kann schließlich innen auch mit Kunststoff beschichtet und sodann kann das Halteelement 6
mittels Ultraschall erhitzt und mit der Kunststoffbeschichtung verschweißt werden. Die Kunststoffbeschichtung
tritt in diesem Fall an die Stelle des Klebstoffes 12
in der Darstellung gemäß Fig. 5.

正常

0103088

Ansprüche

1. Bügel für Börsen, Taschen und dgl. mit zwei Metall-Bügelhälften und mit diese in der Schließstellung haltenden,
   einander hintergreifenden Verschlußstücken, dadurch
   gekennzeichnet, daß das Verschlußstück (5) ein Kunststoffteil ist und an der Bügelhälfte (2) mit mindestens
   einem in diese greifenden Halteelement (6) befestigt ist.

2. Bügel nach Anspruch 1, dadurch gekennzeichnet, daß die
   Bügelhälften (2) einen im Querschnitt U-förmigen Bügelkanal (3) sowie Schenkel (4) aufweist und daß mindestens
   eine Durchtrittsöffnung (7) im Steg (8) des U-förmigen
   Bügelkanals (3) für das bzw. die Halteelemente (6) angeordnet ist.

3. Bügel nach Anspruch 1, dadurch gekennzeichnet, daß das
   Halteelement (6) parallele Stützflächen (9) zu den
   Seitenwänden (1o) aufweist.

4. Bügel nach Anspruch 1, dadurch gekennzeichnet, daß zwei
   Halteelemente (6) am Verschlußstück (5) angeordnet sind.

5. Bügel nach Anspruch 1, dadurch gekennzeichnet, daß das
   Halteelement (6 b) gegenüberliegende Ränder (14)
   der Durchtrittsöffnung (7) elastisch hintergreifende
   Hakenteile (15) aufweist.

6. Bügel nach Anspruch 1, dadurch gekennzeichnet, daß zwei
   einander benachbarte Halteelemente ( 6 c) in einander
   gegenüberliegenden Seiten Sacklöcher (17) zur
   Aufnahme einer Federklammer (16) aufweisen.

- 2 -

7) Bügel nach Anspruch 1, dadurch gekennzeichnet, daß ein Klebstoff (12) zwischen der bzw. den Seitenwänden (1o) des Bügelkanals (3) und der bzw. den Stützflächen (9) des Halteelementes (6) angeordnet ist.

8) Verfahren zum Herstellen eines Bügels nach Anspruch 1, dadurch gekennzeichnet, daß das Halteelement (6 a) mittels Ultraschall erhitzt und sodann unterDruck derart verformt wird, daß es die Ränder (14) der Durchtrittsöffnung (7) im Steg (8) hintergreift.

9) Verfahren zum Herstellen eines Bügels nach Anspruch 1, dadurch gekennzeichnet, daß der Bügelkanal (3) innen mit Kunststoff beschichtet und sodann das Halteelement (6) mittels Ultraschall erhitzt und mit der Kunststoffbeschichtung (12) verschweißt wird.

0103088

1/2

Fig.1

Fig.2

Fig.3

Fig.4

0103088

## Fig. 5

## Fig. 6

## Fig. 7

## Fig. 8

## Fig. 9

## Fig. 10